# EUROPÄISCHE PATENTSCHRIFT

(11) **EP 2 188 156 B1**
(45) Veröffentlichungstag und Bekanntmachung des Hinweises auf die Patenterteilung: **26.02.2014**
(21) Anmeldenummer: 08775043.6
(22) Anmeldetag: 11.07.2008
(51) Int. Cl.: B60R 21/013, B60R 21/01, B60R 21/0136, B60R 21/0132

(54) **VERFAHREN UND STEUERGERÄT ZUR ANSTEUERUNG VON PERSONENSCHUTZMITTELN FÜR EIN FAHRZEUG**
METHOD AND CONTROL DEVICE FOR ACTUATING PERSONAL PROTECTION MEANS FOR A VEHICLE
PROCÉDÉ ET APPAREIL DE COMMANDE DESTINÉS À LA COMMANDE DE MOYENS DE PROTECTION DE PERSONNES DANS UN VÉHICULE

(30) Priorität: 11.09.2007 DE 102007043245
(43) Veröffentlichungstag der Anmeldung: 26.05.2010
(73) Patentinhaber: Robert Bosch GmbH, 70442 Stuttgart (DE)
(72) Erfinder: TRINH, Hoang, 71254 Ditzingen (DE)
(86) Internationale Anmeldenummer: PCT/EP2008/059132
(87) Internationale Veröffentlichungsnummer: WO 2009/033851

(56) Entgegenhaltungen:
- WO-A-2005/036108
- DE-A1- 10 312 105
- DE-A1-102005 044 768

## Beschreibung

### Stand der Technik

Die Erfindung betrifft ein Verfahren bzw. ein Steuergerät zur Ansteuerung von Personenschutzmitteln nach der Gattung der unabhängigen Patentansprüche.

Aus DE 10 2004 038 984 A1 ist bereits eine Vorrichtung zur Crash-Detektion bekannt, bei der als Plausibilisierungssensor ein Körperschall detektierender Sensor sein kann. Die Plausibilität kann dabei für alle Crash-Typen, Frontseite, Heckwinkel und Rollover verwendet werden.

Aus WO 2005/036108 A1 ist es bekannt, eine Signalplausibilisierung von Ausgangssignalen von Fahrzeugsensoren durchzuführen, indem das Sensorausgangssignal eines ersten Fahrzeugsensors mit dem Sensorausgangssignal eines zweiten Fahrzeugsensors plausibilisiert wird. Dabei ist es auch möglich, dass der beschleunigungswiedergebende Signalanteil mit dem körperschallwiedergebenden Signalanteil das Ausgangssignal zum selben Fahrzeugsensor plausibilisiert wird. Aus DE 10 2005 044 768 A1 ist es gemäß dem Oberbegriff des Anspruchs 1 bekannt, eine Plausibilisierung eines von Beschleunigungsdaten abhängigen Signals durch eine Art Körperschallsignal auszuführen. Aus DE 103 2 105 A1 ist es bekannt, eine Algorythmusentscheidung durch zwei Plausibilitätssignale, die miteinander verodert werden, abzusichern.

### Offenbarung der Erfindung

Das erfindungsgemäße Verfahren bzw. das erfindungsgemäße Steuergerät zur Ansteuerung von Personenschutzmitteln für ein Fahrzeug mit den Merkmalen der unabhängigen Patentansprüche haben demgegenüber den Vorteil, dass die Plausibilisierung oder Absicherung durch eine Verknüpfung von wenigstens einem Beschleunigungssignal und wenigstens einem Körperschallsignal als den Sensorsignalen durchgeführt wird. Damit wird die Absicherung verbessert, indem die verschiedenen Informationen, die die Körperschallsignale und die Beschleunigungssignale repräsentieren, verknüpft werden.

Insbesondere für die Seitenaufprallsensierung ist die erfindungsgemäß verbesserte Absicherung von großem Interesse. Die Signalisierung der Absicherung kann beispielsweise durch Flaggen erfolgen.

Vorliegend bedeutet Ansteuerung die Aktivierung der Personenschutzmittel, wie Airbags, Gurtstraffer, crashaktive Kopfstützen und aktive Personenschutzmittel, wie Fahrdynamikregelung oder Bremsen. Signale können vorliegend auch eine Mehrzahl von Einzelsignalen repräsentieren. Als erste Sensorik kann beispielsweise insbesondere im Seitenaufprallfall eine Luftdrucksensorik bzw. eine Temperatursensorik in Frage kommen. Aber auch andere unfallsensierende Sensoriken können vorliegend zur Anwendung kommen.

Grundlegend für die Absicherung oder Plausibilisierung ist die Verwendung einer weiteren Sensorik, die nicht mit der ersten Sensorik übereinstimmt, um aufgrund von unterschiedlichen Vorgängen eine sichere Ansteuerungsentscheidung für die Personenschutzmittel zu erreichen.

Erfindungsgemäß wird dafür eine Beschleunigungssensorik und eine Körperschallsensorik verwendet. Die Beschleunigungssensorik kann dabei beispielsweise in der Fahrzeugseite oder in der Fahrzeugfront angeordnet sein und damit ausgelagert von einem üblicherweise zentral angeordneten Steuergerät. Die Körperschallsensorik kann beispielsweise im Steuergerät selbst oder in einem Sensorcluster oder an einer anderen geeigneten Stelle im Fahrzeug angeordnet sein. Dabei ist die Körperschallsensorik so ausgebildet, dass sie sowohl ein (hochfrequentes) Körperschallsignal als auch ein (niederfrequentes) Beschleunigungssignal liefern kann.

Bei dem Steuergerät handelt es sich vorliegend um eine elektronische Vorrichtung, die Sensorsignale verarbeitet und in Abhängigkeit davon ein Ansteuerungssignal für die Personenschutzmittel erzeugt. Üblicherweise weist ein solches Steuergerät ein Gehäuse aus Metall und/oder Kunststoff auf. Verschiedenste Komponenten sind an das Steuergerät angeschlossen. Dazu zählen Sensoren, Sensorcluster oder weitere Steuergeräte und die Personenschutzmittel.

Bei den Schnittstellen kann es sich vorliegend um Hard- und/oder Software handeln. Insbesondere können die verschiedenen Schnittstellen auf einer Hardware vereinigt sein. Aber auch jede beliebige Aufteilung auf verschiede Substrate ist möglich. Insbesondere kann es sich bei den Schnittstellen um integrierte Schaltkreise oder auch um Softwaremodule handeln.

Die Auswerteschaltung ist üblicherweise ein Mikrocontroller oder ein anderer Prozessor. Es kommen jedoch auch integrierte Schaltkreise oder Kombinationen aus integrierten Schaltkreisen, sowie zumindest Teile davon, aufgebaut aus diskreten Bauelementen in Frage.

Das Ansteuerungsmodul, das Verknüpfungsmodul, das Absicherungsmodul können alle hard- und/oder softwaremäßig ausgebildet sein. Typischerweise können diese Module als Softwaremodule auf dem Mikrocontroller vorhanden sein. Diese Module können Signale in Form von Werten übergeben.

Es ist erfindungskennzeichnend, dass die Verknüpfung dadurch erreicht wird, dass wenigstens eine Schwelle für einen Vergleich mit einem von dem wenigstens einem Beschleunigungssignal abgeleiteten zweiten Signals in Abhängigkeit von dem wenigstens einen Körperschallsignal beeinflusst wird. Die Absicherung erfolgt dann in Abhängigkeit von diesem Vergleich. D. h. die Schwelle für den Vergleich mit einem von dem Beschleunigungssignal abgeleiteten Signal wird in Abhängigkeit vom Körperschallsignal adaptiert. Das vom Beschleunigungssignal abgeleitete Signal kann das Beschleunigungssignal selbst, ein gefiltertes Beschleunigungssignal, ein integriertes Beschleunigungssignal, ein geglättetes Beschleunigungssignal oder ein anderweitig verarbeitetes Beschleunigungssignal sein. Die Beeinflussung kann beispielsweise in einer entsprechenden Absenkung der wenigstens einen Schwelle erfolgen. Es können auch mehrere Schwellen abgesenkt werden, wobei die Schwellen auch zusätzlich von anderen Parametern, wie beispielsweise der Zeit oder anderen Sensorwerten abhängen können. Die Absicherung erfolgt dann in Abhängigkeit von diesem Vergleich, beispielsweise in dem das Ansteuersignal, das anhand des Signals der ersten Sensorik bestimmt wurde, freigegeben wird. Diese Freigabe kann beispielsweise in Form einer Unverknüpfung erfolgen.

Durch die in den abhängigen Ansprüchen aufgeführten Maßnahmen und Weiter bildungen sind vorteilhafte Verbesserungen des in den unabhängigen Patentansprüchen angegebenen Verfahrens bzw. Steuergeräts zur Ansteuerung von Personenschutzmittel für ein Fahrzeug möglich.

Es ist darüber hinaus von Vorteil, dass das Körperschallsignal selbst für die Verknüpfung vorverarbeitet wird. Wie bereits oben angedeutet kann dabei eine Integration, eine Filterung usw. Anwendung finden. Diese Vorverarbeitung ist insbesondere eine Glättung.

Ausführungsbeispiele der Erfindung sind in der Zeichnung dargestellt und werden in der nachfolgenden Beschreibung näher erläutert.

Es zeigen
Figur 1
   ein Blockschaltbild des erfindungsgemäßen Steuergeräts im Fahrzeug mit angeschlossenen Komponenten,
Figur 2
   Softwaremodule auf dem Mikrocontroller des Steuergeräts,
Figur 3
   ein erstes Signalablaufdiagramm,
Figur 4
   ein zweites Signalablaufdiagramm,
Figur 5
   ein drittes Signalablaufdiagramm und
Figur 6
   ein Flussdiagramm des erfindungsgemäßen Verfahrens.

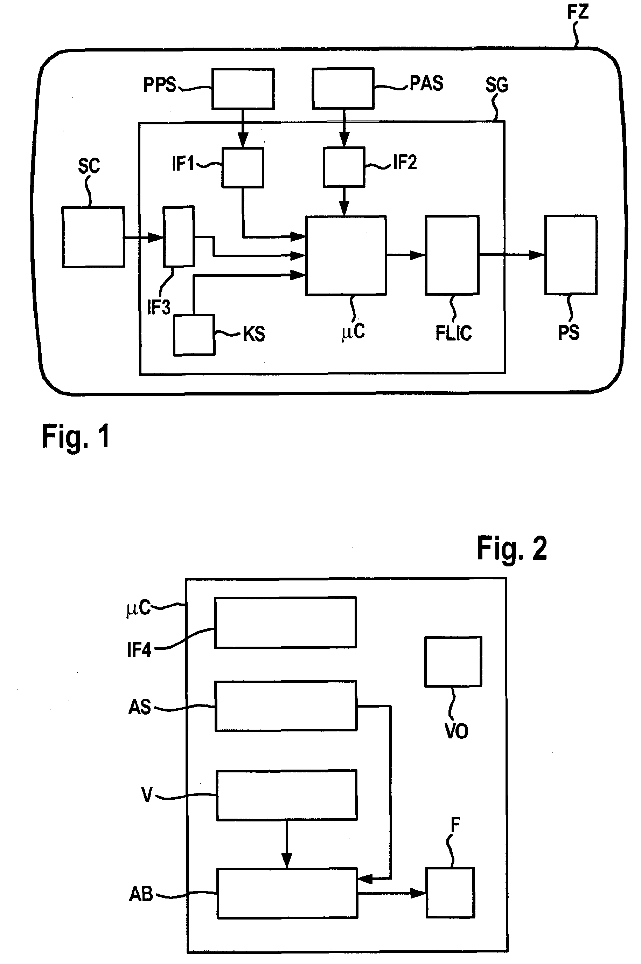

Figur 1 zeigt in einem Blockschaltbild das erfindungsgemäße Steuergerät SG in einem Fahrzeug FZ mit angeschlossenen Komponenten. Verschiedene Sensoreinheiten sind an das Steuergeräts SG angeschlossen. Beispielhaft sind hier lediglich von einer Seite, Seitenaufprallsensoren PAS und PPS angegeben. In einem wirklichen Fahrzeug FZ sind auch gegenüberliegend entsprechende Sensoriken vorhanden.

Bei der Sensorik PPS handelt es sich um eine Luftdrucksensorik, die in einem Seitenteil eines Fahrzeugs angeordnet ist, um einen Seitenaufprall zu detektieren. Diese Luftdrucksensorik kann beispielsweise mit einer Temperatursensorik oder einer Beschleunigungssensorik direkt kombiniert werden. Es ist weiterhin möglich auch eine Annäherungssensorik in der Seite anzuordnen. Bei der Beschleunigungssensorik PAS handelt es sich üblicherweise um Beschleunigungssensoren, die zumindest in Fahrzeugquerrichtung empfindlich sind und beispielsweise in der B-Säule oder dem Türschweller oder dem Sitzquerträger angeordnet sind. Es ist möglich, dass diese Beschleunigungssensoriken auch in Fahrzeuglängsrichtung empfindlich sind.

Die Luftdrucksensorik PPS ist an eine Schnittstelle IF1 im Steuergerät SG angeschlossen, während die Beschleunigungssensorik PAS an die Schnittstelle IF2 im Steuergerät SG angeschlossen ist. Die Übertragung erfolgt üblicherweise über eine Strommodulation eines Ruhestroms. Andere Übertragungstechniken sind möglich. Neben einer Punkt-Zu-Punkt-Verbindung sind auch Busverbindungen möglich. Auch Funkverbindungen sind vorliegend denkbar.

Die Luftdrucksensorik PPS weist ein luftdruckempfindliches, mikromechanisch hergestelltes Element auf, eine Signalaufbereitung und einen Senderbaustein. Weitere Komponenten können vorhanden sein. Üblicherweise ist die Luftdrucksensorik in einem Trockenraum eines Seitenteils angeordnet, mit einer Öffnung zum Nassraum hinein, indem das Aufprallobjekt eindringen wird. Es ist auch eine Anordnung lediglich im Nassraum möglich. Auch die Beschleunigungssensorik PAS weist ein mikromechanisch hergestelltes für Verzögerungen empfindliches Element auf. Auch Signalaufbereitungsschaltungen, sowie ein Senderbaustein sind mindestens vorhanden.

Bei den Schnittstellen IF1, IF2 und auch IF3 handelt es sich vorliegend um integrierte Schaltkreise, die alternativ auch auf einem einzigen integrierten Schaltkreis vereinigt sein können. Eine weitere Alternative sind diese Schnittstellen als Softwareschnittstellen auszubilden.

An die dritte Schnittstelle IF3 ist ein Sensorcluster SC angeschlossen. Dieses Sensorcluster weist beispielsweise kinematische und auch Körperschallsensoren auf. Die entsprechenden Sensorsignale, eventuelle vorverarbeitet können bereits an die Schnittstelle IF3 übertragen werden. Die Verwendung eines Sensorclusters ermöglicht, dass das Steuergerät SG vorteilhafterweise auch ohne eigene Sensoren ausgebildet sein kann und damit die Anordnungsmöglichkeiten für dieses Steuergerät SG größer werden. Das Sensorcluster SC kann auch als Steuergerät ausgebildet sein, insbesondere wenn es bereits eine Vorverarbeitung beinhaltet.

Die Schnittstellen IF1 bis IF3 sind an den Mikrocontroller µC angeschlossen, beispielsweise über den sogenannten SPI (Serial Peripheral Interface Bus) angeschlossen. Einem Mikrocontroller µC ist vorliegend ebenfalls eine Körperschallsensorik KS, die sich im Steuergerät SG befindet, angeschlossen. Diese Körperschallsensorik ist eine Beschleunigungssensorik, die in der Lage ist, Schwingungen von über 400 Hz aufzunehmen und liefert zwei Signale: ein Körperschallsignal (f>400Hz) und ein niederfrequentes Beschleunigungssignal (f<400Hz). Der Mikrocontroller µC verarbeitet dann das Körperschallsignal und/oder dessen Beschleunigungssignal, das beispielsweise schon digital an ihn übertragen werden kann. Der Mikrocontroller µC weist jedoch auch Analog-Eingänge auf; um dann selbst die Digitalisierung und weitere Verarbeitung des Körperschallsignals KS durchzuführen.

Der Mikrocontroller µC, der auch als Dual-Core-Microcontroller ausgebildet sein kann, verarbeitet die Sensorsignale, indem er beispielsweise einen Algorithmus für das Luftdrucksignal rechnet, einen weiteren Algorithmus für das Beschleunigungssignal und einen dritten Algorithmus für das Körperschallsignal. Die Ergebnisse dieser Algorithmen werden vereinigt bzw. fusioniert, um das Ansteuersignal zu erzeugen. Das Ansteuersignal wird dann an die Ansteuerschaltung FLIC übertragen, die für die Aktivierung der Personenschutzmittel PS in der für den Fachmann gewohnten Weise sorgt, indem Leistungsschalter geschlossen werden und eine Bestromung, beispielsweise von Zündelementen von Airbags ermöglichen.

Der Mikrocontroller µC wird vorliegend anhand des Luftdrucksignals das Ansteuersignal durch einen Algorithmus erzeugen, der beispielsweise verschiedene Pfade aufweist. Die Absicherung dieses Ansteuersignals wird in Abhängigkeit von dem Beschleunigungssignal der Beschleunigungssensorik PAS und der Körperschallsensorik KS erfolgen. Weitere Sensorsignale, die beispielsweise vom Sensorcluster SC stammen, können dabei berücksichtigt werden.

Vorliegend sind nur die für das Verständnis der Erfindung notwendigen Komponenten dargestellt. Weitere für den Betrieb des Steuergeräts SG notwendigen Komponenten sind der Einfachheit halber weggelassen worden, um das Verständnis der Erfindung zu erleichtern.

Figur 2 zeigt eine mögliche Softwarestruktur auf dem Mikrocontroller µC. Vorliegend ist eine erfindungsgemäß relevante Auswahl der Softwaremodule vorgestellt. Die vorliegenden Softwaremodule können auch zusammen Softwaremodule bilden.

Eine Softwareschnittstelle IF4, die beispielsweise zur Anbindung des Körperschallsensors KS dient, ist vorhanden. Weiterhin ist ein Vorverarbeitungsmodul VO vorhanden, dass beispielsweise das Körperschallsignal integriert. Darüber hinaus ist ein Ansteuermodul AS vorhanden, dass beispielsweise den Luftdruckalgorithmus berechnet, um das Ansteuersignal zu erzeugen. Darüber hinaus ist ein Verknüpfungsmodul V vorhanden, das das Beschleunigungssignal und das Körperschallsignal in der erfindungsgemäß beschriebenen Weise verknüpft. Das Absicherungsmodul AB gibt das Ansteuersignal des Ansteuerungsmoduls AS nur frei, wenn das Verknüpfungsmodul V ein entsprechendes Signal an das Absicherungsmodul AB überträgt. Dies kann in einfachster Weise durch eine logische Unverknüpfung erreicht werden. Das so freigegebene Ansteuersignal wird dann vom Feuermodul F zur Ansteuerungsschaltung FLIC übertragen. Auch für diese Übertragung kann der sogenannte SPI-Bus verwendet werden.

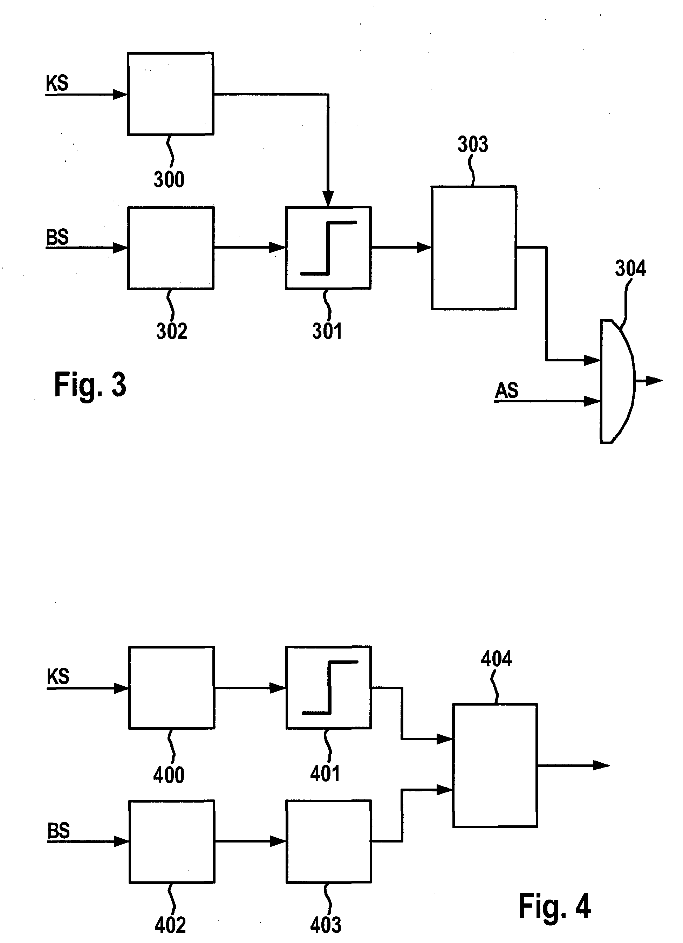

Figur 3 zeigt ein erstes Signalablaufdiagramm zur Erläuterung der Funktionsweise der Erfindung. Das Körperschallsignal KS geht in einen Block 300 ein, der eine Vorverarbeitung vorzugsweise eine Glättung ausführt. Das Beschleunigungssignal BS geht ebenfalls in einem Block 302 ein, der eine entsprechende Vorverarbeitung, beispielsweise eine Integration durchführt. Das so integrierte Beschleunigungssignal geht in den Schwellwertentscheider 301 ein. Hier findet ein Schwellwertvergleich mit einer Schwelle statt. Diese Schwelle wird zumindest in Abhängigkeit vom vorverarbeiteten Körperschallsignal KS beeinflusst. Bei einem entsprechend hohen Körperschallsignal wird diese Schwelle entsprechend abgesenkt. Das Schwellwertvergleichsergebnis des Blocks 301 geht in den Block 303 ein, der dies als Ausgabesignal an das logische Und-Gatter 304 ausgibt. Hier erfolgt die Verknüpfung mit dem Ansteuersignal AS, um dieses Ansteuersignal AS dann freizugeben, wenn die Verknüpfung des Körperschallsignals und des Beschleunigungssignals in der beschriebenen Weise die Plausibilisierung der Ansteuerungsentscheidung anzeigt.

Figur 4 zeigt ein weiteres Ausführungsbeispiel der Erfindung. Das Körperschallsignal KS wird im Block 400 geglättet. Das so geglättete Körperschallsignal wird im Block 401 einem Schwellwertvergleich unterzogen, der ebenfalls Schwellen verwendet, die auch adaptiv oder fest ausgeführt sein können. In einem unteren Auswertepfad wird das Beschleunigungssignal BS einer Vorverarbeitung im Block 402 unterzogen, die beispielsweise wie oben angegeben einer Art der Glättung sein kann. Im Verfahrensschritt 403 wird die Richtung bestimmt, aus der der Aufprall kommt. Dies kann beispielsweise durch entsprechende Auswertung von verschiedenen Beschleunigungssensoren oder anhand der Signalstärke ermittelt werden.

Das Ausgangssignal des Schwellwertentscheiders 401 und die Richtungsinformation 403 werden im Block 404 miteinander verknüpft, um die Absicherung bzw. die Plausibilität des Ansteuersignals zu bilden.

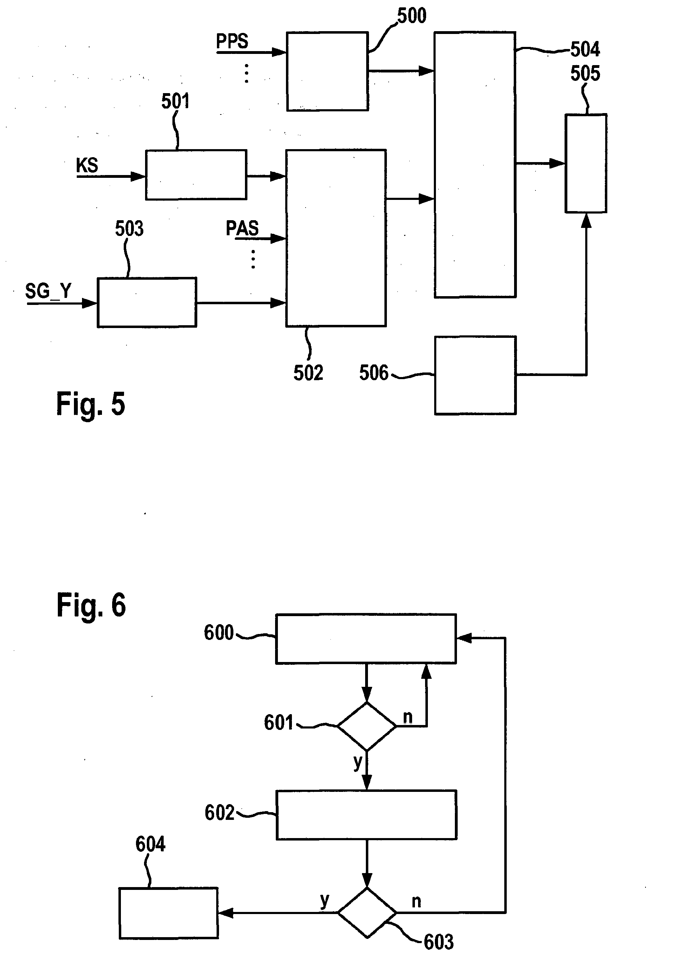

Figur 5 zeigt in einem weiteren Signalablaufdiagramm die Einbettung der Erfindung in die gesamte Algorithmusstruktur. In den Algorithmus zur Auswertung des Luftdrucksignals 500 gehen die Luftdrucksignale ein, Diese sind mit PPS gekennzeichnet. Das Ergebnis des Luftdrucksignals wird dem Block 504 einer Ansteuerungskontrolle zugeführt. In dieser Ansteuerungskontrolle geht auch das Ausgangssignal eines Seitenalgorithmus 502 ein, indem die Beschleunigungssignale PAS, sowie das Ergebnis eines zentralen Seitenalgorithmus 503 eingehen. Der zentrale Seitenalgorithmus 503 wertet das Sensorsignal eines im Steuergerät in Fahrzeugquerrichtung empfindlichen Beschleunigungssensors aus. In den Seitenalgorithmus 502 geht weiterhin die Plausibilisierung 501 anhand des Körperschallsignals KS ein. Das Ergebnis dieser Auswertung 502 geht ebenfalls in die Ansteuerungskontrolle 504 ein und wird dort mit dem Ergebnis des Luftdrucksensoralgorithmus 500 verknüpft. Das Ergebnis dieser Verknüpfung, geht in die Algorithmusfusion 505 ein, bei der weitere Signale mit dem Ergebnis des Blocks 504 fusioniert werden. Diese weiteren Signale sind im Block 506 zusammengefasst, beispielsweise ob die Tür ungeöffnet ist oder die Kraftstoffpumpe abgeschaltet wurde.

Figur 6 zeigt in einem Flussdiagramm das erfindungsgemäße Verfahren. In Verfahrensschritt 600 wird beispielsweise durch den Luftdruckalgorithmus das Luftdrucksignal ausgewertet. In Verfahrensschritt 601 wird bestimmt, ob anhand dieses Luftdrucksignals ein Ansteuersignal erzeugt werden soll oder nicht. Ist das nicht der Fall, wird zu Verfahrensschritt 600 zurückgesprungen. Ist das jedoch der Fall dann wird zu Verfahrenschritt 602 weitergesprungen, bei dem eine Verknüpfung eines Beschleunigungssignals, beispielsweise von den Seitenaufprallbeschleunigungssensoren und des Körperschallsignals stattfindet. Diese Verknüpfung wird in der oben beschriebenen Weise durchgeführt. In Verfahrensschritt 603 wird geprüft, ob diese Verknüpfung die Absicherung bzw. Plausibilisierung des Ansteuersignals gemäß Verfahrensschritt 601 bestätigt. Ist das nicht der Fall wird zu Verfahrensschritt 600 zurückgesprungen. Ist die Plausibilisierung jedoch erfolgreich durchgeführt worden, dann geht man zu Verfahrensschritt 604 und die Ansteuerung der Personenschutzmittel erfolgt.

Im Unterschied zu Fig. 5 sind auch Konfigurationen ohne Luftdrucksensor und Beschleunigungssensor möglich.

## Patentansprüche

1. Verfahren zur Ansteuerung von Personenschutzmitteln (PS) für ein Fahrzeug (FZ), wobei in Abhängigkeit von einem ersten Signal einer ersten Sensorik (PPS) die Personenschutzmittel (PS) angesteuert werden, wobei die Ansteuerung in Abhängigkeit von einem weiteren Sensorsignal abgesichert wird, wobei die Absicherung durch eine Verknüpfung von wenigstens einem Beschleunigungssignal und wenigstens einem Körperschallsignal als den weiteren Sensorsignalen durchgeführt wird, **dadurch gekennzeichnet, dass** die Verknüpfung dadurch erreicht wird, dass wenigstens eine Schwelle für einen Vergleich mit einem von dem wenigstens einen Beschleunigungssignal abgeleiteten zweiten Signal in Abhängigkeit von dem wenigstens einen Körperschallsignal beeinflusst wird, wobei die Absicherung in Abhängigkeit von dem Vergleich erfolgt.

2. Verfahren nach einem der vorhergehenden Ansprüche, **dadurch gekennzeichnet, dass** das wenigstens eine Körperschallsignal für die Verknüpfung vorverarbeitet wird.

3. Verfahren nach Anspruch 2, **dadurch gekennzeichnet, dass** die Vorverarbeitung eine Glättung ist.

4. Steuergerät (SG) zur Ansteuerung von Personenschutzmittel (PS) für ein Fahrzeug (FZ) mit:
- einer ersten Schnittstelle (IF1), die ein erstes Signal einer ersten Sensorik (PPS) bereitstellt,
- einer zweiten Schnittstelle (IF2), die wenigstens einen Beschleunigungssignal bereitstellt,
- einer dritten Schnittstelle (IF3), die wenigstens ein Körperschallsignal bereitstellt,
- einer Auswerteschaltung (µC), die ein Ansteuerungsmodul (AS) aufweist, das in Abhängigkeit von dem ersten Signal ein Ansteuerungssignal er zeugt, wobei die Auswerteschaltung weiterhin ein Verknüpfungsmodul (V) aufweist, das das wenigstens eine Beschleunigungssignal und das wenigstens eine Körperschallsignal zu einem Ausgangssignal miteinander verknüpft, wobei ein Absicherungsmodul (AB) vorgesehen ist, das das Ansteuersignal in Abhängigkeit von dem Ausgangssignals des Verknüpfungsmoduls (V) freigibt, **dadurch gekennzeichnet, dass** das Verknüpfungsmodul (V) wenigstens einen ersten Schwellwertentscheider für einen ersten Vergleich mit einem von dem wenigstens einem Beschleunigungssignal abgeleiteten zweiten Signal aufweist, dass der wenigstens eine erste Schwellwertentscheider wenigstens eine Schwelle für den ersten Vergleich in Abhängigkeit von dem wenigstens einen Körperschallsignal beeinflusst, wobei das Verknüpfungsmodul (V) das Ausgabesignal in Abhängigkeit von dem ersten Vergleich ausführt.

5. Steuergerät nach Anspruch 4, **dadurch gekennzeichnet, dass** die Auswerteschaltung (µC) ein Vorverarbeitungsmodul (VO) für das wenigstens eine Körperschallsignal aufweist.

6. Steuergerät nach Anspruch 5, **dadurch gekennzeichnet, dass** das Vorverarbeitungsmodul (VO) eine Glättung für das wenigstens eine Körperschallsignal aufweist.

## Claims

1. Method for actuating personal protection means (PS) for a vehicle (FZ), the personal protection means (PS) being actuated on the basis of a first signal from a first sensor system (PPS), the actuation being safeguarded on the basis of a further sensor signal, the safeguarding being carried out by linking at least one acceleration signal and at least one structure-borne sound signal as the further sensor signals, **characterized in that** the linking is achieved by virtue of the fact that at least one threshold for comparison with a second signal derived from the at least one acceleration signal is influenced on the basis of the at least one structure-borne sound signal, the safeguarding being effected on the basis of the comparison.

2. Method according to the preceding claim, **characterized in that** the at least one structure-borne sound signal is preprocessed for linking.

3. Method according to Claim 2, **characterized in that** the preprocessing is smoothing.

4. Control device (SG) for actuating personal protection means (PS) for a vehicle (FZ), having:
- a first interface (IF1) which provides a first signal from a first sensor system (PPS),
- a second interface (IF2) which provides at least one acceleration signal,
- a third interface (IF3) which provides at least one structure-borne sound signal,
- an evaluation circuit (µC) having an actuation module (AS) which generates an actuation signal on the basis of the first signal, the evaluation circuit also having a linking module (V) which links together the at least one acceleration signal and the at least one structure-borne sound signal to form an output signal, a safeguarding module (AB) being provided and releasing the actuation signal on the basis of the output signal from the linking module (V), **characterized in that** the linking module (V) has at least one first threshold value decision unit for a first comparison with a second signal derived from the at least one acceleration signal, **in that** the at least one first threshold value decision unit influences at least one threshold for the first comparison on the basis of the at least one structure-borne sound signal, the linking module (V) executing the output signal on the basis of the first comparison.

5. Control device according to Claim 4, **characterized in that** the evaluation circuit (µC) has a preprocessing module (VO) for the at least one structure-borne sound signal.

6. Control device according to Claim 5, **characterized in that** the preprocessing module (VO) has smoothing for the at least one structure-borne sound signal.

## Revendications

1. Procédé de commande de moyens de protection personnelle (PS) pour un véhicule (FZ), les moyens de protection personnelle (PS) étant commandés en fonction d'un premier signal d'un premier dispositif de détection (PPS), la commande étant sécurisée en fonction d'un signal de capteur supplémentaire, la sécurisation étant effectuée par une combinaison d'au moins un signal d'accélération et d'au moins un signal de bruit de structure faisant office de signaux de capteur supplémentaires, **caractérisé en ce que** la combinaison est obtenue **en ce qu'**au moins un seuil pour une comparaison avec un deuxième signal dérivé de l'au moins un signal d'accélération est influencé en fonction de l'au moins un signal de bruit de structure, la sécurisation s'effectuant en fonction de la comparaison.

2. Procédé selon la revendication précédente, **caractérisé en ce que** l'au moins un signal de bruit de structure est prétraité pour la combinaison.

3. Procédé selon la revendication 2, **caractérisé en ce que** le prétraitement est un lissage.

4. Contrôleur (SG) pour commander des moyens de protection personnelle (PS) pour un véhicule (FZ), comprenant :
- une première interface (IF1) qui délivre un premier signal d'un premier dispositif de détection (PPS),
- une deuxième interface (IF2) qui délivre au moins un signal d'accélération,
- une troisième interface (IF3) qui délivre au moins un signal de bruit de structure,
- un circuit d'interprétation (µC) qui présente un module de commande (AS) qui génère un signal de commande en fonction du premier signal, le circuit d'interprétation présentant en outre un module de combinaison (V) qui combine entre eux l'au moins un signal d'accélération et l'au moins un signal de bruit de structure en un signal de sortie, un module de sécurisation (AB) étant prévu, lequel valide le signal de commande en fonction du signal de sortie du module de combinaison (V), **caractérisé en ce que** le module de combinaison (V) présente au moins un premier déterminateur de valeur de seuil pour une première comparaison avec un deuxième signal dérivé de l'au moins un signal d'accélération, **en ce que** l'au moins un premier déterminateur de valeur de seuil influence au moins un seuil pour la première comparaison en fonction de l'au moins un signal de bruit de structure, le module de combinaison (V) réalisant le signal de sortie en fonction de la première comparaison.

5. Contrôleur selon la revendication 4, **caractérisé en ce que** le circuit d'interprétation (µC) présente un module de prétraitement (VO) pour l'au moins un signal de bruit de structure.

6. Contrôleur selon la revendication 5, **caractérisé en ce que** le module de prétraitement (VO) présente un lissage pour l'au moins un signal de bruit de structure.
